# EUROPÄISCHE PATENTSCHRIFT

(11) **EP 0 964 821 B1**
(45) Veröffentlichungstag und Bekanntmachung des Hinweises auf die Patenterteilung: **03.04.2002**
(21) Anmeldenummer: 98912419.3
(22) Anmeldetag: 27.02.1998
(51) Int. Cl.: B65D 73/02, H05K 13/00

(54) **VERFAHREN ZUR HERSTELLUNG UND MAGAZINIERUNG VON MIKROBAUTEILEN, MAGAZIN UND MONTAGEVERFAHREN FÜR MIKROBAUTEILE**
METHOD FOR PRODUCING AND MAGAZINING MICRO COMPONENTS, MAGAZINE AND ASSEMBLY METHOD FOR MICRO COMPONENTS
PROCEDE DE FABRICATION ET DE MAGASINAGE DE MICROCOMPOSANTS, MAGASIN ET PROCEDE DE MONTAGE POUR MICROCOMPOSANTS

(30) Priorität: 06.03.1997 DE 19709136
(43) Veröffentlichungstag der Anmeldung: 22.12.1999
(73) Patentinhaber: INSTITUT FÜR MIKROTECHNIK MAINZ GmbH, 55129 Mainz-Hechtsheim (DE)
(72) Erfinder: EHRFELD, Wolfgang, D-55124 Mainz (DE); LEHR, Heinz, D-10783 Berlin (DE); WEBER, Lutz, D-55288 Gabsheim (DE)
(74) Vertreter: Fuchs Mehler Weiss & Fritzsche
(86) Internationale Anmeldenummer: EP9801134
(87) Internationale Veröffentlichungsnummer: WO9839230

(56) Entgegenhaltungen:
- DE-A- 4 141 775
- DE-A- 19 535 971
- DE-U- 8 517 432
- "Cornerless Chip Bank" IBM TECHNICAL DISCLOSURE BULLETIN., Bd. 36, Nr. 05, Mai 1993, NEW YORK US, Seiten 395-396, XP000409033

## Beschreibung

Die Erfindung betrifft ein Verfahren zur Herstellung und Magazinierung von Mikrobauteilen sowie ein Magazin für mindestens ein Mikrobauteil und ein Montageverfahren für Mikrobauteile.

Die bisher übliche Vorgehensweise zur Magazinierung von Mikrobauteilen besteht darin, die Komponenten auf Träger- und Transportvorrichtungen so anzuliefern, daß sie für den Montagevorgang mittels spezieller Greifwerkzeuge von dem Träger aufgenommen werden können. Je nach Bauform der Einzelkomponenten sind diese in definiertem Abstand z.B. auf einseitig klebefähigen Bändern (Bluetape) angebracht oder in sogenannten Gelpacks durch ein Gel lagegerecht fixiert (F&M (Feinwerktechnik, Mikrotechnik, Mikroelektronik) 105, (1997), 43-45). Andere Methoden bestehen darin, die Mikrobauteile in schachbrettartigen Vertiefungen rechteckförmiger Tabletts oder in modular aufgebauten Magazinen lage- und greifgerecht zu positionieren (41. internationales wissenschaftliches Kolloquium der TU Ilmenau, 25.09.96). Das Ordnungsschema erlaubt ein definiertes Greifen oder Abnehmen dieser Teile vom Träger.

Nachteilig bei diesem Verfahren ist jedoch, daß zur Relativpositionierung und Ordnung der Teile häufig nicht das Ordnungsschema des Fertigungsprozesses genutzt wird, sondern statt dessen die Mikrobauteile zunächst als Schüttgut geliefert und sodann zeitraubend auf die oben genannten Transportmittel positions- und greifgerecht aufgesetzt werden. Damit wird nach dem Fertigungsprozeß ein Zwischenschritt zur Magazinierung benötigt, dessen Komplexität erheblich ist und mit dem späteren Mikromontageschritt an Aufwand vergleichbar ist.

Das Dokument "Cornerless Chip Bank", IBM TECHNICAL DISCLOSURE BULLETIN, Bd. 36, Nr. 05, Mai 1993 offenbart ein Magazin für Bauelemente in Form eines Plastikgehäuses, welches mit eckenlosen Umrandungen hergestellt wird, um eine Beschädigung der Bauelemente an deren Ecken bei der Handhabung des Magazins zu verhindern. Das Magazin umfaßt die Bauelemente an ihren seitlichen Flächen nicht vollständig formschlüssig. Ein weiterer wesentlicher Nachteil besteht darin, daß eine separate Herstellung von Bauelementen und Magazin notwendig ist, wodurch ein zusätzlicher Magazinierungsschritt durch einzelnes Einsetzen der Bauelemente in das vorgefertigte Magazin notwendig ist. Weiterhin ist es nachteilig, daß durch die separate Herstellung Bauteiltoleranzen entstehen, die wiederum Ungenauigkeiten in der Positions- und Lagegenauigkeit der Bauelemente im Magazin erzeugen. Ein weiterer wesentlicher Nachteil besteht darin, daß die Bauelemente nach der Einlagerung ins Magazin auf der Bodenplatte aufliegen, so daß die Bauelemente nur an deren oberen Stirnfläche frei zugänglich sind.

Die DE-U-85 17 432 offenbart ein Magazin, das als Trägerstreifen ausgebildet ist und mehrere Kleinbauteile seitlich formschlüssig umfaßt und das von einem Montageautomaten erfaßt und gehalten wird, wobei das zu montierende Kleinbauteil aus dem Magazin herausgedrückt und gleichzeitig an seinem bestimmungsgemäßen Ort positioniert wird.

Aufgabe der Erfindung ist es, ein Verfahren und ein Magazin bereitzustellen, mit dem die Handhabung von Mikrobauteilen vereinfacht wird.

Es ist auch Aufgabe der Erfindung, die Handhabung bei der Montage von Mikrobauteilen zu verbessern.

Das Verfahren zur Herstellung und Magazinierung von Mikrobauteilen ist durch folgende Schritte gekennzeichnet:
a. Formgebung mindestens eines Mikrobauteils auf einer Bauteilgrundplatte,
b. Eingießen mindestens der freiliegenden seitlichen Flächen des Mikrobauteils mittels eines sich verfestigenden Formstoffes,
c. Entfernen der Bauteilgrundplatte und/oder des das Mikrobauteil überdeckenden Formstoffs.

Das Magazin ist Gegenstand des Patentanspruchs 14 und das Montageverfahren ist Gegenstand des Patentanspruchs 22.

Der erste Schritt des erfindungsgemäßen Verfahrens betrifft die Formgebung eines oder mehrerer Mikrobauteile, wobei die gleichzeitige Herstellung einer Gruppe von Mikrobauteilen auf der Oberfläche einer Bauteilgrundplatte bevorzugt ist.

Das Mikrobauteil bzw. die Mikrobauteile und die Bauteilgrundplatte können getrennt hergestellt werden. Bevorzugt ist jedoch die gleichzeitige Herstellung der Mikrobauteile und der Bauteilgrundplatte, weil dadurch ein Fertigungsprozeß eingespart und die Positionierung des Mikrobauteils auf der Bauteilgrundplatte beim Herstellungsprozeß bereits festgelegt wird, so daß auch ein Positioniervorgang eingespart wird.

Ein weiterer Vorteil der gemeinsamen Herstellung von Bauteilgrundplatte und Mikrobauteil besteht darin, daß beispielsweise beim Spritzgießen mit größeren Materialmengen (sogenanntes Schußgewicht) gearbeitet werden kann. So kann ferner die Spritzdüse an der Bauteilgrundplatte angeschlossen sein, was hinsichtlich der Dimensionierung der Spritzdüse vorteilhaft ist, weil keine Anpassung an die weitaus kleineren Mikrobauteile erforderlich ist.

Außer dem Spritzgießen können weitere Abformverfahren, wie Heißprägen, Reaktionsgießen oder Galvanoformen genutzt werden, die eine vergleichsweise technisch einfache und gleichzeitig kostengünstige Fertigung einer großen Anzahl von Mikrobauteilen erlauben. Ferner können die Mikrobauteile und die Bauteilgrundplatte durch spanende Verfahren, ein funkenerosives Verfahren, ein Ätzverfahren oder ein Laserablationsverfahren hergestellt werden.

Als Materialien für die Mikrobauteile und/oder die Bauteilgrundplatte eignen sich Kunststoffe, Keramik oder Metall sowie Silizium und Glas.

Ferner vereinfacht die Anordnung mehrerer Mikrobauteile auf einer gemeinsamen Bauteilgrundplatte die Handhabung, weil nicht jedes einzelne Mikrobauteil transportiert werden muß.

Die Bauteilgrundplatte wird vorzugsweise mit einer Außenkontur hergestellt, die mit der Außenkontur des Magazins übereinstimmt. Die Außenkontur entspricht vorteilhafterweise der Außenkontur einer Compact Disc oder einer 5 Zoll-Silizium-Scheibe, weil dadurch herkömmliche Greifeinrichtungen, die aus der Chipfertigung bekannt sind, eingesetzt werden können. Spezielle Greifsysteme, die an die Formgebung der Mikrobauteile angepaßt sind, erübrigen sich daher.

Für den zweiten Verfahrensschritt, der das Eingießen des Mikrobauteils betrifft, wird ein sich verfestigender Formstoff, vorzugsweise Kunststoff, Paraffin oder Wachs verwendet. Das Eingießen ist vorzugsweise ein Spritzgieß- oder Vakuumgießprozeß. Das Eingießen kann so erfolgen, daß lediglich die seitlichen Oberflächen des auf der Bauteilgrundplatte befindlichen Mikrobauteils eingegossen werden, so daß das Mikrobauteil stirnseitig zugänglich bleibt. Je nach Ausgestaltung des Mikrobauteils kann es jedoch von Vorteil sein, sämtliche freiliegenden Oberflächen des Mikrobauteils einzugießen. Bei diesem Vorgang wird auch die Bauteilgrundplatte, jedenfalls teilweise, eingegossen, so daß das Mikrobauteil bzw. die Mikrobauteile allseitig von der Bauteilgrundplatte und dem Formstoff umgeben ist bzw. sind.

Im dritten Verfahrensschritt erfolgt die eigentliche Magazinierung des Mikrobauteils. Nach der Aushärtung des Formstoffs werden die Bauteilgrundplatte und/oder der das Mikrobauteil überdeckende Formstoff entfernt. Dies kann durch Schleifen, Läppen, Fräsen oder Polieren geschehen. Vorzugsweise wird sowohl die Bauteilgrundplatte als auch der überdeckende Formstoff entfernt, so daß zwei gegenüberliegende Seiten des Mikrobauteils freiliegen. Die übrigen Flächen des Mikrobauteils sind formschlüssig in den Formstoff eingebettet. Im Ergebnis entsteht eine scheibenförmige Platte, die ein oder mehrere Mikrobauteile seitlich formschlüssig umfaßt, welche stirnseitig zugänglich bleiben.

Die Vorteile dieser Magazinierung liegen darin:
- daß der Ordnungszustand, d.h. die definierte Position, in dem sich die einzelnen Mikrobauteile nach der Herstellung befinden, nach einem Transport beibehalten wird und die Teile später auch für die Montage in geordneter Weise nutzbar sind,
- daß aufgrund einer angepaßten äußeren Form der Scheibe, wie die einer Compact Disc oder die einer 5 Zoll-Silizium-Scheibe, dem Stand der Technik entsprechende Handhabungsgeräte für die Weiterverarbeitung benutzt werden können und
- daß die in der Regel empfindlichen Seitenflächen der Mikrobauteile durch den Formstoff der Scheibe geschützt sind.

Je nach Verwendungszweck des Mikrobauteils kann es von Vorteil sein, vor dem Eingießen eine Beschichtung der freiliegenden Oberfläche des Mikrobauteils durchzuführen. Durch die Verwendung einer gemeinsamen Bauteilgrundplatte kann auch die Beschichtung kostengünstiger durchgeführt werden, weil mehrere Mikrobauteile gleichzeitig dem Beschichtungsvorgang unterzogen werden können. Die Beschichtung kann mittels eines PVD- oder eines CVD-Verfahrens durchgeführt werden. Es kann auch eine Plasmabehandlung oder ein Tauchverfahren eingesetzt werden.

Vorzugsweise wird eine verschleißfeste Schicht aufgebracht, was insbesondere bei der Herstellung von Zahnrädern zweckmäßig ist. Die verschleißfeste Schicht kann während des dritten Verfahrensschrittes in dem zu bearbeitenden Oberflächenbereich abgetragen werden oder der dritte Verfahrensschritt wird so gesteuert, daß die verschleißfeste Schicht vollständig erhalten bleibt. Jedenfalls wird die verschleißfeste Schicht in den eingebetteten Bereichen des Mikrobauteils belassen.

Das Magazin ist gekennzeichnet durch eine scheibenförmige Platte, die das Mikrobauteilelement mindestens an seinen seitlichen Flächen formschlüssig umfaßt. Vorzugsweise ist/sind das Mikrobauteil bzw. die Mikrobauteile derart im Magazin angeordnet, daß die Symmetrieachse des Mikrobauteils senkrecht auf der Plattenebene steht. Dadurch wird erreicht, daß das Mikrobauteil problemlos aus dem Magazin entfernt werden kann. Wenn das Mikrobauteil keine Symmetrieachse aufweist, muß die Anordnung im Magazin so gewählt sein, daß das Mikrobauteil herausschiebbar ist, d.h. die Bauteile dürfen sich in Richtung des Herausschiebens nicht verjüngen und dürfen keine Hinterschneidung aufweisen.

Das Magazin ist vorzugsweise rund, wobei die Außenkontur vorzugsweise der Außenkontur einer Compact Disc oder einer 5 Zoll-Silizium-Scheibe entspricht, so daß bekannte Handhabungseinrichtungen genutzt werden können. Es ist vorteilhaft, wenn die Abmessungen des Magazins den gültigen Standards entsprechen, zu denen entsprechende Montage- und Positionierungstechnologien existieren. Hierzu gehören auch Anschläge zum Ausrichten des Magazins (sog. Flats) oder auch Löcher, wie bei einer CD.

Als Material für das Magazin ist Kunststoff, Paraffin oder Wachs bevorzugt. Je nachdem, wie das Magazin für die weitere Handhabung der Mikrobauteile eingesetzt werden soll, kann es von Vorteil sein, wenn das Material des Magazins optisch transparentes Material aufweist. Vorzugsweise besteht das Magazin aus PMMA. Um die Stabilität zu erhöhen, können im Magazinmaterial, das dem Formstoff entspricht, zusätzlich Stabilisierungselemente eingelagert sein.

Der Vorteil dieses Magazins besteht darin, daß es für das nachfolgende Montageverfahren der Mikrobauteile eingesetzt werden kann. Erfindungsgemäß wird ein Magazin, das als scheibenförmige Platte ausgebildet und mindestens ein Mikrobauteil seitlich formschlüssig umfaßt, von einer Magazinhalterung erfaßt und gehalten. Das zu montierende Mikrobauteil wird anschließend aus dem Magazin herausgedrückt und gleichzeitig an seinem bestimmungsgemäßen Ort positioniert.

Vorzugsweise wird das scheibenförmige Magazin so positioniert, daß sich das zu montierende Mikrobauteil direkt über oder unter seinem Montageplatz befindet. Das Magazin wird durch Unterdruck von der Magazinhalterung gehalten. Mittels eines Stempels kann das Mikrobauteil auf einfache Weise aus dem Magazin herausgedrückt werden. Durch diese Vorgehensweise können gleichzeitig eine Vielzahl von Mikrobauteilen gehandhabt werden. Weiterhin müssen für kleine und damit besonders empfindliche Bauteile keine entsprechend komplizierte Mikrogreifer zum Aufnehmen der Bauteile aus dem Magazin sowie deren Positionierung am Montageort vorhanden sein. Außerdem können vorhandene Kamerasysteme zur Positionskontrolle bei der Mikromontage auch verwendet werden, wenn als Formstoff des Magazins ein optisch transparentes Material gewählt wird.

Je nach Ausgestaltung des Mikrobauteils ist es erforderlich, vor dem Herausdrücken des Mikrobauteils aus dem Magazin, im Inneren des Mikrobauteils befindliches Formmaterial zu entfernen. Dieses Formmaterial kann vorzugsweise herausgeblasen werden.

Beispielhafte Ausführungsformen der Erfindung werden nachfolgend anhand der Zeichnungen näher erläutert.

Es zeigen:
- Figur 1: eine perspektivische Darstellung eines Mikrozahnrads
- Figur 2a: eine Draufsicht auf mehrere Mikrozahnräder auf einer gemeinsamen Bauteilgrundplatte
- Figur 2b: einen Schnitt längs der Linie II-II der in Figur 2a gezeigten Anordnung
- Figur 3: einen Schnitt durch eine Gießform mit eingelegter Bauteilgrundplatte und darauf angeordneten Mikrozahnrädern
- Figur 4a, 4b: Draufsicht und Querschnitt eines Magazins mit eingebetteten Mikrozahnrädern
- Figur 5a,5b: zwei Montageschritte unter Verwendung eines Magazins
- Figur 6: ein gestuftes Mikrozahnrad in perspektivischer Darstellung und
- Figuren 7a, 7b: Draufsicht und Schnitt durch ein Magazin mit eingebetteten, gestuften Mikrozahnrädern.

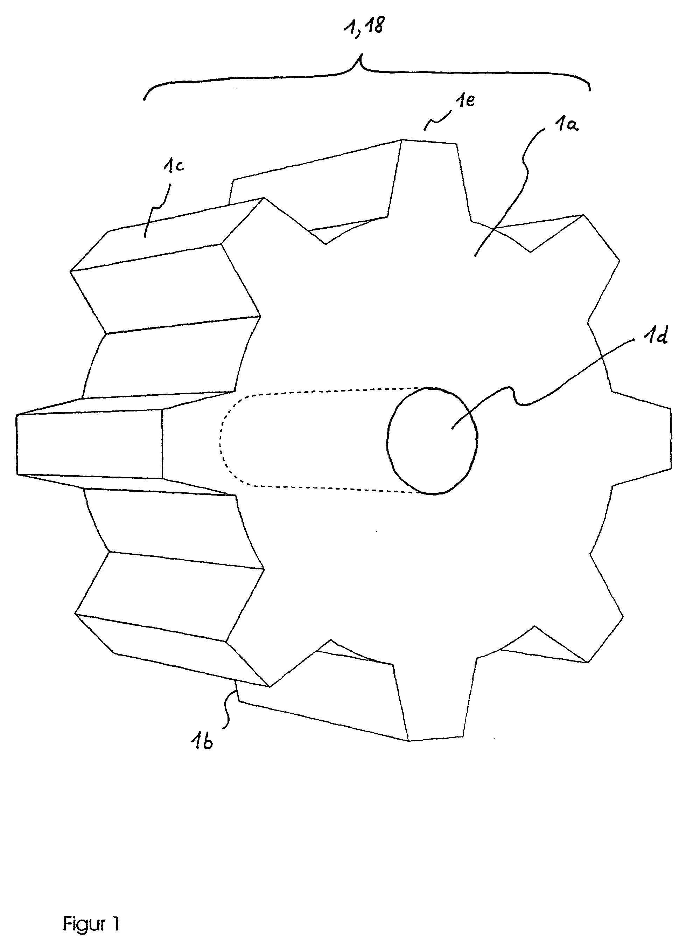

In der Figur 1 ist ein Mikrobauteil 18 in Form eines Mikrozahnrads 1 mit seiner Mittenbohrung 1d, seiner oberen Stirnfläche 1a und der Mantelfläche 1c dargestellt, die mehrere Zähne 1e aufweist. Die untere Stirnfläche des Mikrozahnrades 1 trägt das Bezugszeichen 1b.

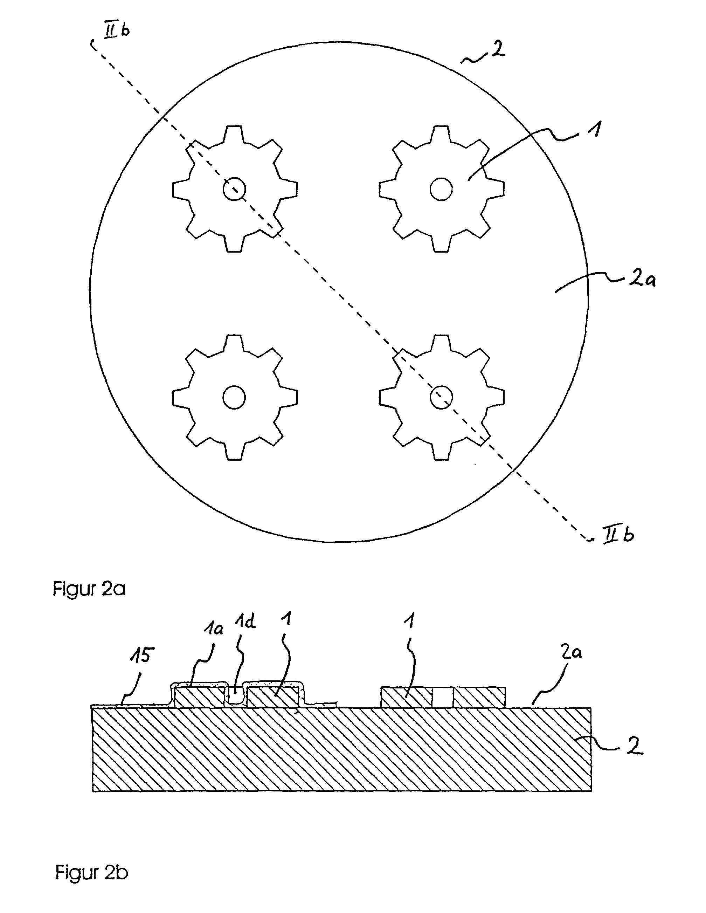

In der Figur 2a ist die Draufsicht auf eine gemeinsame Bauteilgrundplatte 2 dargestellt, die eine runde Form aufweist. Auf der Oberseite 2a der Bauteilgrundplatte sind vier der in Figur 1 gezeigten Mikrozahnräder 1 angeordnet.

In der Figur 2b ist ein Schnitt durch die in der Figur 2a gezeigte Anordnung längs der Linie II-II dargestellt. Das in der Darstellung linke Mikrozahnrad 1 ist zusätzlich mit einer Beschichtung 15 versehen, die sich über sämtliche freiliegenden Flächen des Mikrozahnrades 1 erstreckt. Die Beschichtung 15 bedeckt nicht nur die seitlichen Flächen, also die Zähne 1e und die dazwischen befindlichen Zwischenräume, sondern auch die obere Stirnseite 1a und die durch die Mittenbohrung 1d gebildeten Flächen.

Die Bauteilgrundplatte 2 und die Mikrozahnräder 1 können aus demselben Material und gleichzeitig hergestellt sein. Es besteht aber auch die Möglichkeit, die Bauteilgrundplatte 2 und die Mikrozahnräder 1 getrennt anzufertigen und anschließend auf der Bauteilgrundplatte anzuordnen. Typische Verfahren zur Herstellung sind Abformverfahren, wie Spritzgießen, Reaktionsgießen, Heißprägen oder Galvanoformung. aber auch Prozesse zur Direktstrukturierung wie Fräsen, Funkenerosion oder Laserablation. Typische Abmessungen eines Mikrozahnrades 1 liegen im Bereich von 0.2 mm bis 1 mm für Durchmesser und Höhe.

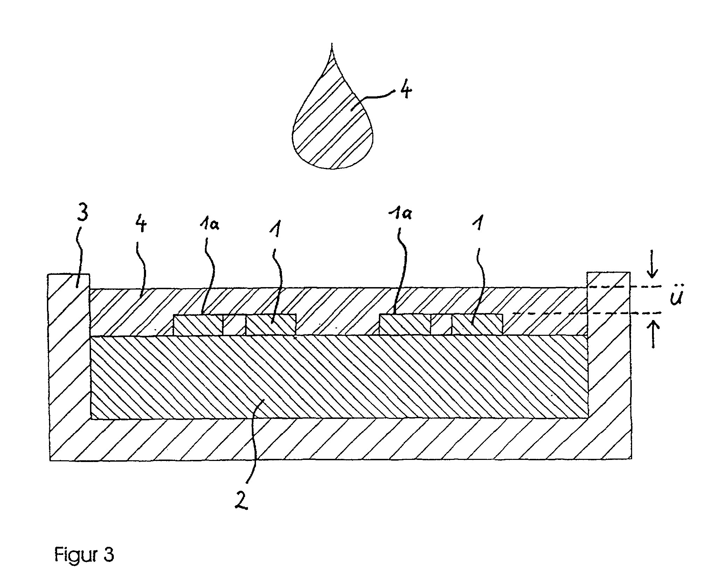

Die Bauteilgrundplatte 2 wird mit den darauf befindlichen Mikrozahnrädern 1 gemäß Fig. 3 in eine Gießhalterung 3 eingesetzt, die im wesentlichen die Form eines Troges hat. Das Eingießen erfolgt mittels eines Formstoffes 4, wobei es sich vorzugsweise um einen Kunststoff handelt. In der hier gezeigten Darstellung wird so viel Formstoff in die Gießhalterung 3 eingegossen, daß die freiliegende Oberfläche der Bauteilgrundplatte 2 und die Mikrozahnräder 1 vollständig in den Formstoff eingebettet werden. Die oberen Stirnseiten 1a der Mikrozahnräder 1 werden vollständig vom Formstoff 4 bedeckt. Der Überstand Ü liegt in der hier gezeigten Darstellung in der Größenordnung der Dicke der Zahnräder 1. Nach dem Aushärten des Formstoffs 4 sind der Formstoff und die Mikrozahnräder 1 formschlüssig miteinander verbunden. Anschließend wird die Bauteilgrundplatte mit den Mikrozahnrädern 1 und dem Formstoff 4 aus der Gießhalterung 3 entnommen.

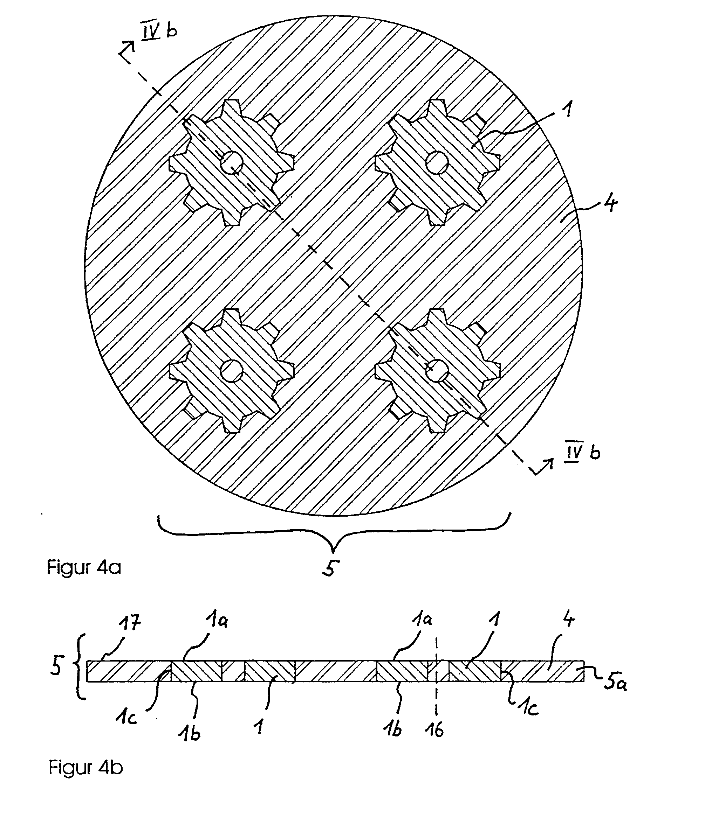

Anschließend wird durch eine entsprechende Bearbeitung, vorzugsweise einer spanenden Bearbeitung, der Überstand Ü und die Bauteilgrundplatte 2 abgetragen, so daß die obere 1a und die untere Stirnseite 1b der Mikrozahnräder 1 freiliegen. Dies ist in der Figur 4a in Draufsicht und in der Figur 4b im Querschnitt dargestellt. Im Ergebnis entsteht eine scheibenförmige Platte 5a, das Magazin 5, das die Mikrozahnräder 1 seitlich formschlüssig umfaßt, diese stirnseitig jedoch für die Umgebung zugänglich hält, wobei die Mikrozahnräder 1 derart im Magazin 5 angeordnet sind, daß die Symmetrieachse 16 senkrecht auf der Plattenebene 17 steht.

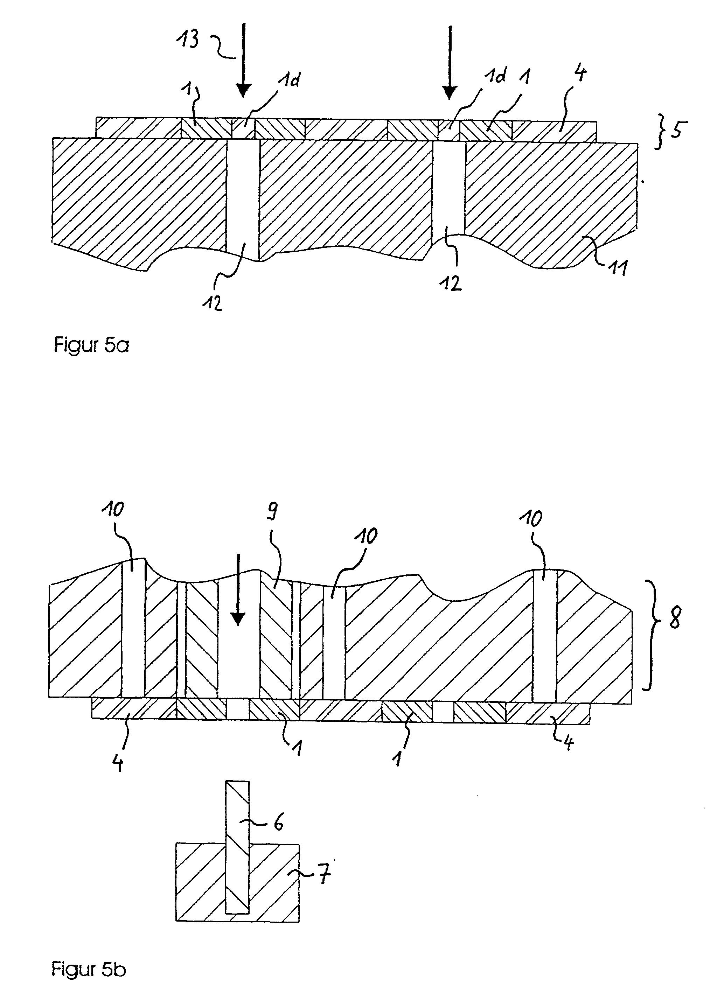

Die Figuren 5a und 5b zeigen ein Ausführungsbeispiel für die Montage eines Mikrozahnrades 1. Zunächst wird der Formstoff im Bereich der Mittenbohrung 1d des Mikrozahnrades 1 entfernt (s. Figur 5a). Dies geschieht durch Auflegen des Magazins 5 auf einer Lochplatte 11 in der Weise, daß sich der Bereich der Mittenbohrung 1d des Mikrozahnrads 1 unmittelbar über einem Loch 12 der Lochplatte 11 befindet. Anschließend wird der sich im Bereich der Mittenbohrung 1d des Mikrozahnrads 1 befindliche Formstoff mit Hilfe von senkrecht zur Oberfläche 1a des Mikrozahnrads gerichteter Druckluft 13 durch die Löcher 12 der Lochplatte 11 ausgeblasen.

Figur 5b zeigt die Montage eines derart vorbehandelten Mikrozahnrades 1 auf eine Welle 6, die sich in einer entsprechenden Wellenhalterung 7 befindet. Das Magazin befindet sich an einer Magazinhalterung 8, wo sie vorzugsweise über Ansaugkanäle 10 mittels Unterdruck festgehalten wird. Über dem Zahnrad 1 befindet sich in der Magazinhalterung 8 ein beweglicher Stempel 9. Nach Positionierung des Mikrozahnrades 1 über der Welle 6 wird der ringförmige Stempel 9 nach unten bewegt und das Mikrozahnrad 1 auf die Welle 6 gedrückt.

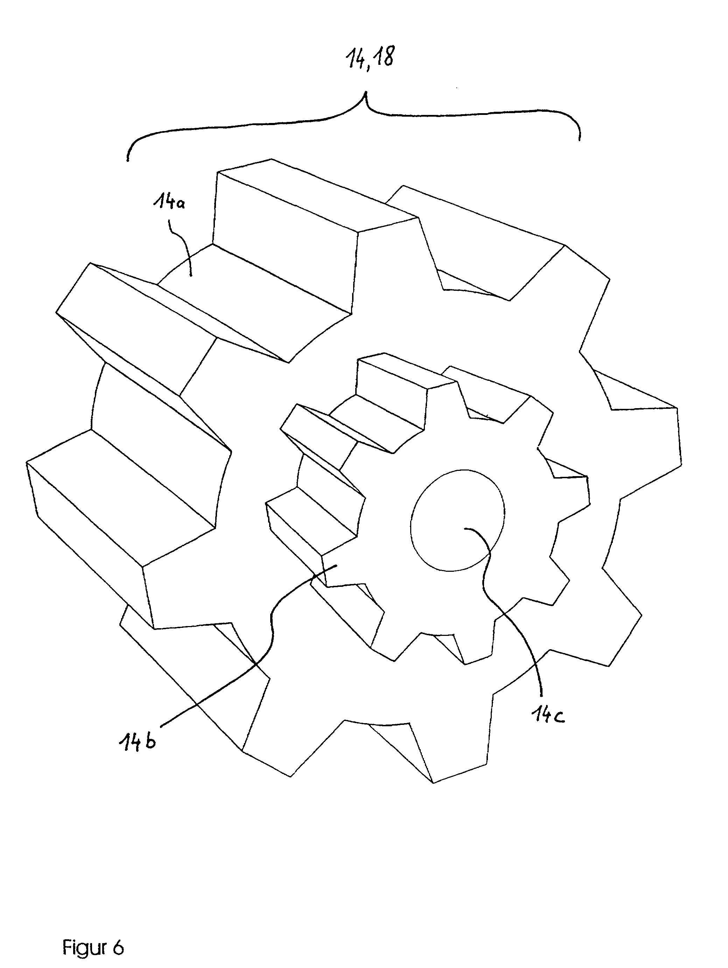

In der Figur 6 ist der prinzipielle Aufbau eines Mikrobauteils 18 in Form eines gestuften Mikrozahnrades 14 mit seiner Mittenbohrung 14c und den Zahnradstufen 14a und 14b dargestellt. Diese Zahnradstufen besitzen eine unterschiedliche Kontur und unterschiedliche Durchmesser.

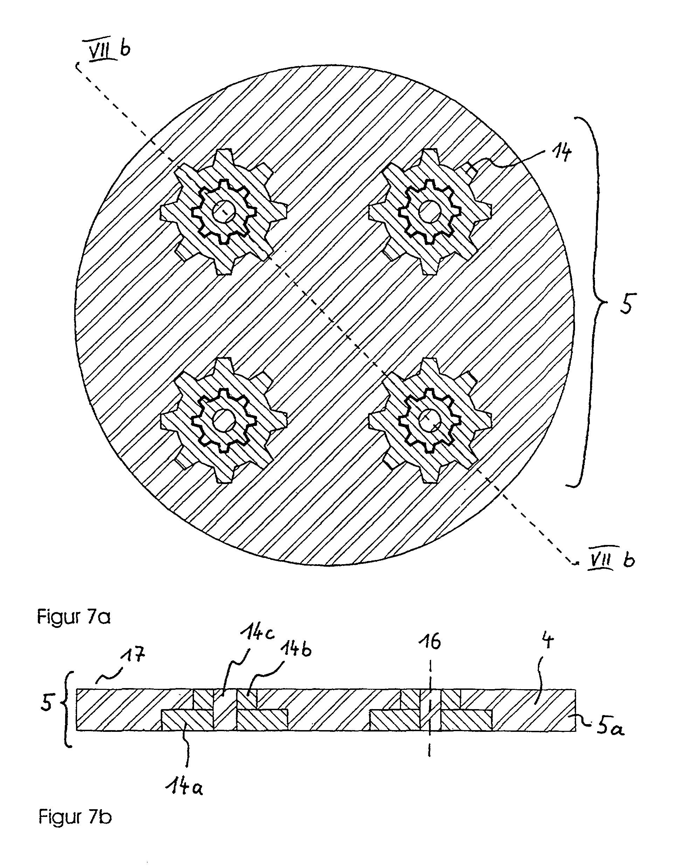

In den Figuren 7a und 7b ist das Magazin 5 für solche gestuften Zahnräder 14 in Draufsicht und im Schnitt dargestellt. Die Herstellung des Magazins 5 entspricht der zuvor erläuterten Herstellungsweise. Das gleiche gilt auch für die Montage des Zahnrades. Dieses gestufte Zahnrad 14 ist derart im Magazin 5 angeordnet, daß die Symmetrieachse 16 senkrecht auf der Scheibenfläche 17 des Magazins 5 steht. Die Richtung, in der sich das zwei- oder mehrstufige Zahnrad 14 aus dem Magazin herausdrücken läßt, ist aufgrund der Struktur vorgegeben. In der hier gezeigten Darstellung 7b können die Zahnräder 14 nach unten aus dem Magazin entfernt werden.

### Bezugszeichen:

- 1: Mikrozahnrad
- 1a: obere Stirnseite des Mikrozahnrads
- 1b: untere Stirnseite des Mikrozahnrads
- 1c: Mantel des Mikrozahnrads
- 1d: Mittelbohrung des Mikrozahnrads
- 1e: Zahn
- 2: Bauteilgrundplatte
- 2a: Oberseite der Bauteilgrundplatte
- 3: Gießhalterung
- 4: Formstoff
- 5: Magazin
- 5a: scheibenförmige Platte
- 6: Welle
- 7: Wellenhalterung
- 8: Magazinhalterung
- 9: Stempel
- 10: Ansaugkanal
- 11: Lochplatte
- 12: Löcher in der Lochplatte
- 13: Druckluft
- 14: gestuftes Zahnrad
- 14a: Zahnradstufe
- 14b: Zahnradstufe
- 14c: Mittenbohrung
- 15: Beschichtung
- 16: Symmetrieachse
- 17: Plattenebene
- 18: Mikrobauteil

## Patentansprüche

1. Verfahren zur Herstellung und Magazinierung von Mikrobauteilen (1, 18), **gekennzeichnet durch** folgende Schritte:
a. Formgebung mindestens eines Mikrobauteils (1, 18) auf einer Bauteilgrundplatte (2)
b. Eingießen mindestens der freiliegenden seitlichen Flächen (1c) des Mikrobauteils (1, 18) mittels eines sich verfestigenden Formstoffs (4)
c. Entfernen der Bauteilgrundplatte (2) und/oder des das Mikrobauteil (1, 18) überdeckenden Formstoffs.

2. Verfahren nach Anspruch 1, **dadurch gekennzeichnet, daß** das Mikrobauteil (1, 18) und die Bauteilgrundplatte (2) gleichzeitig hergestellt werden.

3. Verfahren nach Anspruch 1 oder 2, **dadurch gekennzeichnet, daß** das Mikrobauteil (1, 18) und die Bauteilgrundplatte (2) aus demselben Material hergestellt werden.

4. Verfahren nach Anspruch 1, **dadurch gekennzeichnet, daß** das Mikrobauteil (1, 18) auf einer fertigen Bauteilgrundplatte (2) hergestellt wird.

5. Verfahren nach einem der Ansprüche 1 bis 4, **dadurch gekennzeichnet, daß** das Mikrobauteil (1, 18) und/oder die Bauteilgrundplatte (2) durch ein Spritzgießverfahren, Reaktionsgießverfahren, Heißprägeverfahren oder ein Galvanoformungsverfahren hergestellt werden.

6. Verfahren nach einem der Ansprüche 1 bis 4, **dadurch gekennzeichnet, daß** das Mikrobauteil (1, 18) und die Bauteilgrundplatte (2) durch ein spanendes Verfahren, ein funkenerosives Verfahren, ein Laserablationsverfahren oder ein Ätzverfahren hergestellt werden.

7. Verfahren nach einem der Ansprüche 1 bis 6, **dadurch gekennzeichnet, daß** die Bauteilgrundplatte (2) mit der Außenkontur einer Compact Disc oder einer 5 Zoll-Silizium-Scheibe hergestellt wird.

8. Verfahren nach einem der Ansprüche 1 bis 7, **dadurch gekennzeichnet, daß** sich als verfestigender Formstoff (4) ein Kunststoff, Paraffin oder ein Wachs verwendet wird.

9. Verfahren nach einem der Ansprüche 1 bis 8, **dadurch gekennzeichnet, daß** das Eingießen ein Spritzgieß- oder Vakuumgießprozeß ist.

10. Verfahren nach einem der Ansprüche 1 bis 9, **dadurch gekennzeichnet, daß** die Bauteilgrundplatte (2) und/oder der das Mikrobauteil (1, 18) überdeckende Formstoff durch Schleifen, Läppen, Fräsen oder Polieren entfernt wird.

11. Verfahren nach einem der Ansprüche 1 bis 10, **dadurch gekennzeichnet, daß** vor dem Eingießen des Mikrobauteils (1, 18) dieses an seiner freiliegenden Oberfläche (1a) beschichtet wird.

12. Verfahren nach Anspruch 11, **dadurch gekennzeichnet, daß** die Beschichtung (15) mittels PVD, CVD, einer Plasmabehandlung oder durch Tauchen hergestellt wird.

13. Verfahren nach Anspruch 11 oder 12, **dadurch gekennzeichnet, daß** eine verschleißfeste Schicht (15) aufgebracht wird.

14. Magazin für mindestens ein Mikrobauteil (1, 18), **gekennzeichnet durch**
eine scheibenförmige Platte (5a) aus einem verfestigten Formstoff, die das Mikrobauteil (1, 18) **dadurch** mindestens an seinen seitlichen Flächen (1c) formschlüssig umfaßt, daß diese Flächen mit dem Formstoff eingegossen sind.

15. Magazin nach Anspruch 14, **dadurch gekennzeichnet, daß** die Platte (5a) das Mikrobauteil (1, 18) derart umfaßt, daß die Symmetrieachse (16) des Mikrobauteils (1, 18) senkrecht auf der Plattenebene (17) steht.

16. Magazin nach Anspruch 14 oder 15, **dadurch gekennzeichnet, daß** die Platte (5a) das Mikrobauteil (1, 18) derart umfaßt, daß es sich in Richtung des Herausschiebens aus dem Magazin (5) nicht verjüngt.

17. Magazin nach einem der Ansprüche 14 bis 16, **dadurch gekennzeichnet, daß** die Platte (5a) eine Außenkontur aufweist, die der einer Compact Disc oder einer 5 Zoll-Silizium-Scheibe entspricht.

18. Magazin nach einem der Ansprüche 14 bis 17, **dadurch gekennzeichnet, daß** die Platte (5a) aus Kunststoff, Paraffin oder Wachs besteht.

19. Magazin nach einem der Ansprüche 14 bis 18, **dadurch gekennzeichnet, daß** die Platte (5a) aus optisch transparentem Material besteht.

20. Magazin nach einem der Ansprüche 14 bis 17, **dadurch gekennzeichnet, daß** die Platte (5a) aus PMMA besteht.

21. Magazin nach einem der Ansprüche 14 bis 20, **dadurch gekennzeichnet, daß** es Stabilisierungselemente aufweist.

22. Montageverfahren für Mikrobauteile (1, 18), **dadurch gekennzeichnet,**
**daß** ein Magazin (5), das als scheibenförmige Platte (5a) ausgebildet und mindestens ein Mikrobauteil (1, 18) seitlich formschlüssig umfaßt, von einer Magazinhalterung erfaßt und mit Unterdruck gehalten wird,
**daß** das zu montierende Mikrobauteil (1, 18) aus dem Magazin herausgedrückt und gleichzeitig an seinem bestimmungsgemäßen Ort positioniert wird.

23. Montageverfahren nach Anspruch 22, **dadurch gekennzeichnet, daß** vor dem Herausdrücken des Mikrobauteils (1, 18) aus dem Magazin (5) im Inneren (ld) des Mikrobauteils (1, 18) befindliches Formmaterial entfernt wird.

## Claims

1. Process for producing and magazining microcomponents (1, 18), **characterised by** the following steps:
a. shaping at least one microcomponent (1, 18) on a component base plate (2)
b. casting at least one of the exposed lateral surfaces (1c) of the microcomponent (1, 18) by means of a solidifying moulding material (4)
c. removing the component base plate (2) and/or the moulding material covering the microcomponent (1, 18).

2. Process according to claim 1, **characterised in that** the microcomponent (1, 18) and the component base plate (2) are produced at the same time.

3. Process according to claim 1 or 2, **characterised in that** the microcomponent (1, 18) and the component base plate (2) are produced from the same material.

4. Process according to claim 1, **characterised in that** the microcomponent (1, 18) is produced on a finished component base plate (2).

5. Process according to one of claims 1 to 4, **characterised in that** the microcomponent (1, 18) and/or the component base plate (2) are produced by an injection-moulding process, reaction injection-moulding process, hot-stamping process or an electroforming process.

6. Process according to one of claims 1 to 4, **characterised in that** the microcomponent (1, 18) and the component base plate (2) are produced by a metal-cutting process, an electrical discharge process, a laser-ablation process or an etching process.

7. Process according to one of claims 1 to 6, **characterised in that** the component base plate (2) is produced with the outer contour of a compact disc or a 5-inch wafer crystal.

8. Process according to one of claims 1 to 7, **characterised in that** a plastic, paraffin or a wax is used as solidifying moulding material (4).

9. Process according to one of claims 1 to 8, **characterised in that** casting is an injection-moulding or vacuum-casting process.

10. Process according to one of claims 1 to 9, **characterised in that** the component base plate (2) and/or the moulding material covering the microcomponent (1, 18) is removed by abrading, lapping, milling or polishing.

11. Process according to one of claims 1 to 10, **characterised in that** before casting the microcomponent (1, 18), the latter is coated on its exposed surface (1a).

12. Process according to claim 11, **characterised in that** the coating (15) is produced by means of PVD, CVD, a plasma treatment or by immersion.

13. Process according to claim 11 or 12, **characterised in that** a wear-resistant layer (15) is applied.

14. Magazine for at least one microcomponent (1, 18) **characterised by** a disc-like plate (5a) made from a solidified moulding material, which surrounds the microcomponent (1, 18) in form-fit manner at least at its lateral surfaces (1c), in that these surfaces are cast with the moulding material.

15. Magazine according to claim 14, **characterised in that** the plate (5a) surrounds the microcomponent (1, 18) such that the axis (16) of symmetry of the microcomponent (1, 18) stands vertically on the plane (17) of the plate.

16. Magazine according to claim 14 or 15, **characterised in that** the plate (5a) surrounds the microcomponent (1, 18) such that it is not tapered in the direction of pushing-out from the magazine (5).

17. Magazine according to one of claims 14 to 16, **characterised in that** the plate (5a) has an outer contour which corresponds to that of a compact disc or a 5-inch wafer crystal.

18. Magazine according to one of claims 14 to 17, **characterised in that** the plate (5a) consists of plastic, paraffin or wax.

19. Magazine according to one of claims 14 to 18, **characterised in that** the plate (5a) consists of visually transparent material.

20. Magazine according to one of claims 14 to 17, **characterised in that** the plate (5a) consists of PMMA.

21. Magazine according to one of claims 14 to 20, **characterised in that** it has stabilising elements.

22. Mounting process for microcomponents (1, 18), **characterised in that** a magazine (5), which is designed as a disc-like plate (5a) and laterally surrounds in form-fit manner at least one microcomponent (1, 18), is engaged by a magazine mounting and held by depression, **in that** the microcomponent (1, 18) to be mounted is pressed out of the magazine and at the same time positioned at its agreed location.

23. Mounting process according to claim 22, **characterised in that** before pressing-out the microcomponent (1, 18) from the magazine (5), moulding material situated in the interior (1d) of the microcomponent (1, 18) is removed.

## Revendications

1. Procédé de fabrication et de magasinage de microcomposants (1, 18), **caractérisé en ce qu'**il comprend les étapes suivantes : (a) façonnage d'un microcomposant (1, 18) au moins sur une plaque de base (2), (b) scellement par coulée des surfaces latérales libres (1c) au moins du microcomposant (1, 18) au moyen d'une matière de moulage (4) se solidifiant et (c) enlèvement de la plaque de base (2) et/ou de la matière de moulage recouvrant le microcomposant (1, 18).

2. Procédé selon la revendication 1, **caractérisé en ce que** le microcomposant (1, 18) et la plaque de base (2) sont fabriqués en même temps.

3. Procédé selon la revendication 1 ou 2, **caractérisé en ce que** le microcomposant (1, 18) et la plaque de base (2) sont fabriqués dans la même matière.

4. Procédé selon la revendication 1, **caractérisé en ce que** le microcomposant (1, 18) est fabriqué sur une plaque de base (2) préfabriquée.

5. Procédé selon l'une quelconque des revendications 1 à 4, **caractérisé en ce que** le microcomposant (1, 18) et/ou la plaque de base (2) est/sont fabriqué(s) au moyen d'un procédé de moulage par injection, de moulage réactif, d'estampage à chaud ou d'électroformage.

6. Procédé selon l'une quelconque des revendications 1 à 4, **caractérisé en ce que** le microcomposant (1, 18) et la plaque de base (2) sont fabriqués au moyen d'un procédé par enlèvement de copeaux, d'électro-érosion, d'ablation au laser ou de mordançage.

7. Procédé selon l'une quelconque des revendications 1 à 6, **caractérisé en ce que** la plaque de base (2) est fabriquée de manière à présenter le contour extérieur d'un disque compact ou d'un disque de silicium de 5 pouces.

8. Procédé selon l'une quelconque des revendications 1 à 7, **caractérisé en ce qu'**une matière synthétique, de la paraffine ou une cire est utilisée comme matière de moulage (4) se solidifiant.

9. Procédé selon l'une quelconque des revendications 1 à 8, **caractérisé en ce que** le scellement par coulée est un processus de moulage par injection ou de moulage sous vide.

10. Procédé selon l'une quelconque des revendications 1 à 9, **caractérisé en ce que** la plaque de base (2) et/ou la matière de moulage recouvrant le microcomposant (1, 18) sont/est enlevée(s) par meulage, rodage, fraisage ou polissage.

11. Procédé selon l'une quelconque des revendications 1 à 10, **caractérisé en ce que** la surface libre (1a) du microcomposant (1, 18) est revêtue avant le scellement de celui-ci par coulée.

12. Procédé selon la revendication 11, **caractérisé en ce que** le revêtement (15) est fabriqué par dépôt physique en phase vapeur (PVD), dépôt chimique en phase vapeur (CVD), traitement au plasma ou immersion.

13. Procédé selon la revendication 11 ou 12, **caractérisé en ce qu'**une couche (15) résistant à l'usure est appliquée.

14. Magasin pour un microcomposant (1, 18) au moins, **caractérisé en ce qu'**il comporte une plaque (5a) en forme de disque en matière de moulage solidifiée, laquelle entoure par fermeture géométrique le microcomposant (1, 18) au moins par ses surfaces latérales (1c), de telle sorte que celles-ci soient scellées par coulée avec la matière de moulage.

15. Magasin selon la revendication 14, **caractérisé en ce que** la plaque (5a) entoure le microcomposant (1, 18) de telle manière que l'axe de symétrie (16) du microcomposant (1, 18) soit perpendiculaire au plan (17) de la plaque (5a).

16. Magasin selon la revendication 14 ou 15, **caractérisé en ce que** la plaque (5a) entoure le microcomposant (1, 18) de telle manière qu'elle ne se rétrécisse pas dans le sens d'éjection du magasin (5).

17. Magasin selon l'une quelconque des revendications 14 à 16, **caractérisé en ce que** la plaque (5a) présente un contour extérieur correspondant à celui d'un disque compact ou d'un disque de silicium de 5 pouces.

18. Magasin selon l'une quelconque des revendications 14 à 17, **caractérisé en ce que** la plaque (5a) est en matière synthétique, en paraffine ou en cire.

19. Magasin selon l'une quelconque des revendications 14 à 18, **caractérisé en ce que** la plaque (5a) est en matière optiquement transparente.

20. Magasin selon l'une quelconque des revendications 14 à 17, **caractérisé en ce que** la plaque (5a) est en poly(méthacrylate de méthyle) (PMMA).

21. Magasin selon l'une quelconque des revendications 14 à 20, **caractérisé en ce qu'**il présente des éléments de stabilisation.

22. Procédé de montage pour microcomposants (1, 18), **caractérisé en ce qu'**un magasin (5), lequel est conformé comme une plaque (5a) en forme de disque et entoure latéralement par fermeture géométrique un microcomposant (1, 18) au moins, est saisi par un dispositif de manutention de magasins et maintenu par dépression, et **en ce que** le microcomposant (1, 18) à monter est éjecté du magasin et positionné en même temps à l'endroit prévu de destination.

23. Procédé de montage selon la revendication 22, **caractérisé en ce que** la matière de moulage se trouvant à l'intérieur (1d) du microcomposant (1, 18) est éliminée avant que le microcomposant (1, 18) soit éjecté du magasin (5).
